# EUROPÄISCHE PATENTANMELDUNG

(11) **EP 0 539 802 A1**
(43) Veröffentlichungstag der Anmeldung: **05.05.1993**
(21) Anmeldenummer: 92117604.6
(22) Anmeldetag: 15.10.1992
(51) Int. Cl.: C08G 18/08, C08G 18/10, C08G 18/80, C08G 18/79, C08J 3/24, C08L 75/04

(54) **Freifliessende, thermoplastisch verarbeitbare und dabei nachvernetzende, gegebenenfalls expandierbare Polyurethan-Pulver (-Zubereitungen)**

(30) Priorität: 28.10.1991 DE 4135475; 25.03.1992 DE 4209709
(71) Anmelder: BAYER AG, 51368 Leverkusen (DE)
(72) Erfinder: Werner, Joachim, Dr., W-4047 Dormagen (DE); Meckel, Walter, Dr., W-4040 Neuss (DE); Liman, Ulrich, Dr., W-4019 Monheim (DE); Wegener, Dirk, Dr., W-4019 Monheim (DE); Rasshofer, Werner, Dr., W-5000 Köln 80 (DE); Rosthauser, James W., Dr., Glen Dale, WV 26038 (US)

(57) **Zusammenfassung**

Es werden freifließende, zunächst wie ein Thermoplast aufschmelzende und dabei zunehmend vernetzende Polyurethan-Pulver beschrieben, die erhältlich sind durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
sowie
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen aufweist,
   in Gegenwart einer separat hergestellten Komponente III, die (gegebenenfalls nur anteilig) blockierte NCO-Gruppen aufweist,
   in einer inerten organischen, flüssigen Trägerphase, in der die Komponenten IA bzw. IB und das jeweilige Umsetzungsprodukt mit Komponenten IIA bzw. IIB und III unlöslich sind, sowie
c) Abtrennung des Umsetzungsproduktes von der genannten inerten organischen Trägerphase.

## Beschreibung

Die vorliegende Erfindung betrifft freifließende, thermoplastisch verarbeitbare und dabei nachvernetzende Polyurethan-Pulver, ihre Herstellung sowie ihre Verwendung zur Herstellung vernetzter Folien durch Verarbeiten oberhalb des Schmelzpunktes wahrend des "powder-slush-moulding"-Prozesses.

Die vorliegende Erfindung betrifft ferner expandierbare, treibmittelhaltige Polyurethan-Pulverzubereitungen sowie ihre Verwendung zur Herstellung geschäumter Polyurethan-Formkörper.

Auf vielen Gebieten der Kunststoffherstellung und -verarbeitung spielen Pulver eine wichtige Rolle. Aufgrund ihres hohen Zerteilungsgrades und des damit verbundenen Fließvermögens finden sie z.B. Verwendung zur Herstellung von Klebstoffen, Beschichtungen oder dünnen Filmen und Folien.

Bekannt und in zahlreichen Patent- und Literaturveröffentlichungen (vgl. z.B. Kunststoff-Handbuch, Band 7, "Polyurethane", 1. Auflage 1966, 2. Auflage 1983, Carl Hanser Verlag, München, Wien) beschrieben ist auch die Herstellung zellhaltiger (geschäumter) Formkörper aus mikrozellularen Polyurethan-Elastomeren oder Polyurethan-Schaumstoffen. (Im folgenden wird "Polyurethan" auch mit "PU" abgekürzt). Sie werden üblicherweise hergestellt, indem flüssige Treibmittel enthaltende, gieß- bzw. fließfähige Reaktionsmischungen aus organischen Polyisocyanaten und Verbindungen mit mindestens zwei reaktiven Wasserstoffatomen in gegebenenfalls temperierte Formwerkzeuge eingefüllt und dort anschließend aufgeschäumt und ausgehärtet werden.

Polyurethan-Formkörper mit einer kompakten, im wesentlichen porenfreien Randzone oder Oberfläche und einem zelligen Kern (PU-Integralschaumstoffe) werden bekannterweise hergestellt, indem mehr der schaumfähigen Reaktionsmischung in das Formwerkzeug gefüllt wird, als zur vollständigen, drucklosen Ausschäumung des Werkzeughohlraums notwendig ist, so daß die Verschäumung in einem geschlossenen Formwerkzeug unter Verdichtung durchgeführt wird.

Für zahlreiche Anwendungen, z.B. für die Schalldämmung etwa im Motorraum von Kraftfahrzeugen, werden dünne PU-Schaumstoffplatten oder -folien verwendet, die in großen PU-Schaumstoffblöcken oder Verkleben von PU-Schaumstoffabfällen unter Druck hergestellt werden. Wünschenswert wäre hier, die Schaumstoffteile in möglichst wenigen Arbeitsgängen direkt in der gewünschten Form herzustellen, wobei der Schäum- und Härtevorgang üblicher flüssiger Reaktivsysteme bei derartig kleinen Schaumstoffteilen aber nur schwierig zu bewerkstelligen ist.

Bekannt ist z.B. auch die Verwendung dekorativer Kunstoff-Folien im Kraftfahrzeug-Innenraum [R. Pfriender, Kunststoffe, 76(1986), 10, S. 960 ff]. Dabei werden gemaß dem Stand der Technik üblicherweise nach dem Thermoform-Verfahren verformte PVC/ABS-Folien verwendet, die anschließend hinterschäumt werden. Aus Flüssig-Systemen hergestellte PU-Folien können nach dem IMC-Verfahren (In-Mould-Coating) verarbeitet werden. Die Herstellung der Bauteile ist aber sehr aufwendig und wird noch kaum beherrscht (M. Wachsmann, Kunststoffberater, 10/1987,S.27-28).

Die Herstellung wesentlich feiner strukturierter und hinterschnittener, also qualitativ höherwertiger Folien erlaubt demgegenüber das "powder-slush-moulding"-Verfahren. Dabei wird nach dem Stand der Technik PVC-Pulver verwendet, welches durch Schwenken im erhitzten Formwerkzeug bei etwa 250°C geliert wird. Nach dem Abkühlen der Form kann die Folie entnommen und zur Hinterschäumung eingesetzt werden. Auch hier ist also ein Wechsel der hergestellten Folie in ein anderes Formteil, also eine Hinterschäumung in einer zweiten Apparatur, notwendig.

Nachteilig an den üblicherweise mit PU-Schaumstoffen hinterschäumten PVC-Folien ist jedoch die gegenseitige negative Beeinflussung der PVC-Folie und der Hinterschäumung. Katalysatoren oder Stabilisatoren können aus dem PU-Schaum in die PVC-Deckschicht diffundieren, gleichzeitig findet eine Migration von z.B. Weichmachern in umgekehrter Richtung statt. Durch diese Prozesse können die Formkörper, z.B. durch Versprödung, mechanisch geschädigt oder verfärbt werden. Eine Vermeidung dieser schädigenden Wechselwirkungen wird möglich durch Verwendung von PU-Pulver zur Erzeugung der Deckschichten und deren Hinterschäumung mit PU-Schaum mit dem zusätzlichen Vorteil, einen einheitlichen Kunststoffverbund erhalten, der einfacher wiederaufzuarbeiten ist. Von Vorteil wäre dabei ein gegenüber dem Stand der Technik vereinfachtes Verfahren, bei dem die erzeugte Haut direkt im gleichen Formteil, in dem sie hergestellt wurde, hinterschäumt werden kann.

Unter dem Gesichtspunkt der Wiederaufarbeitbarkeit sind ferner Verbundsysteme aus einer einheitlichen Kunststofftype erwünscht.

Somit besteht von seiten der Automobilindustrie starkes Interesse an einheitlichen Materialien, bei denen die obengenannten negativen Wechselwirkungen zwischen Deckschicht und Hinterschäumung nicht auftreten und die Möglichkeit eines einfacheren Recycling besteht. Naheliegend ist daher die Verwendung von PU-Deckfolien, die mit PU hinterschäumt werden.

Bekannt ist die Möglichkeit, thermoplastische Polyurethane (TPU), die durch Extrusion- oder Bandverfahren aus der Schmelze erhalten werden, nachträglich zu granulieren und zu mahlen und schließlich PU-Pulver zu erhalten [DE-A 39 16 874], die durch Sintern zu Folien verarbeitet werden können.

Beschrieben ist auch die Möglichkeit, die so erhaltenen TPU-Pulver im Gemisch mit einem bei 23°C festen Treibmittel durch Sintern zu zelligen PU-Formkörpern, vorzugsweise PU-Flächengebilden, zu verarbeiten. Diese treibmittelhaltigen PU-Pulvermischungen können z.B. im erwähnten powder-slush-Verfahren zum Hinterschäumen der vorher erzeugten Haut ohne Wechsel des Formteils verwendet werden (DE-A 4 006 648).

Dieses Vorgehen, also das Verwenden von durch Extrusions- oder Bandverfahren hergestellten TPU ist zum einen wegen des zur Pulverherstellung notwendigen nachgeschalteten aufwendigen Mahlungsprozesses nachteilig. Wegen der Zähigkeit der verwendeten Materialien muß beim Mahlen stark gekühlt werden, z.B. mit flüssigem Stickstoff. Hinzu kommen aufwendige Vorrichtungen zur Staubvermeidung. Zudem kann die irreguläre Form des Mahlgutes Probleme bei der Fließfähigkeit des Pulvers hervorrufen. Die Herstellung der treibmittelhaltigen TPU-Pulvermischung muß wegen der hohen Temperaturen des Extrusions- oder Bandverfahrens durch nachträgliches Abmischen des Pulvers mit dem bei 23°C festen, ebenfalls pulverförmigen Treibmittel erfolgen, was einen zusätzlichen aufwendigen Verarbeitungsschritt bedeutet.

Die Verwendung von thermoplastischen PU-Systemen erlaubt das Sintem der Pulver unter Verlaufen der Schmelze zu einer homogenen Deckschicht. Bei rein thermoplastischen (linearen) Systemen tritt aber das Phänomen auf, daß die niedrigviskose TPU-Schmelze an senkrechten Formwerkzeugoberflächen oder an überhitzten Formwerkzeugstellen ab- oder wegfließt und es somit zu ungleichmäßiger Dicke der Schicht oder sogar zu Löchern in der Folie kommt. Die thermoplastische Verarbeitung setzt ein zunächst weitgehend lineares System voraus. Eine während des Verarbeitungsprozesses eintretende Vernetzung ist vorteilhaft wegen des eintretenden Viskositätsaufbaus.

Bekannt ist die Möglichkeit, Isocyanate mit monofunktionellen Reaktionspartnern ("Verkappungsmittel") wie z.B. Oximen, Caprolactam oder Phenolderivaten zu thermolabilen Addukten umzusetzen und mittels dieser "verkappten Isocyanate" Systeme zu erhalten, die bis zur Spalttemperatur der Addukte thermoplastisch sind und oberhalb dieser Temperatur vernetzen.

Weiterhin ist die Verwendung von Uretdionen oder Uretdiongruppen-haltigen Polyisocyanaten in einkomponentigen PU-Reaktivsystemen an sich bekannt. Die Uretdiongruppen enthaltenden Polyisocyanate werden durch Zusammenlagerung ("Dimerisierung") zweier Isocyanatgruppen in Gegenwart spezieller Katalysatoren erhalten. Die Uretdiongruppen spalten bei höherer Temperatur unter Rückbildung zweier Isocyanatgruppen, die z.B. in Gegenwart von OH-Gruppen unter Vernetzung weiterreagieren, auf. Dies geschieht ohne Freisetzung eines "Verkappungsmittels".

Die Herstellung solcher verkappte Isocyanate enthaltender 1K-PU-Systeme nach dem herkömmlichen Extrusions- oder Bandverfahren in der Schmelze, wie z.B. in der genannten DE-A 39 16 874 und DE-A 40 06 648 beschrieben, ist aber grundsätzlich problematisch, da dabei die Spalttemperatur erreicht oder überschritten werden kann und das System schon bei der Herstellung vernetzt. Außerdem muß, wie oben beschrieben, das Produkt anschließend in kosten- und materialaufwendiger Weise zum Pulver vermahlen werden.

Demgegenüber stellt die an sich bekannte (US-A 4.985.490; EP-A 394 789) Direktherstellung von PU-Pulvern durch Polyaddition in Emulsion ein Verfahren dar, welches sofort und bei vergleichsweise moderaten Reaktionstemperaturen freifließende Pulver liefert.

Die direkte Herstellung pulverförmiger thermoplastischer Polyurethane durch Umsetzung von Polyester- oder Polyetherpolyolen und niedermolekularen Diolen mit Polyisocyanaten in einem inerten Lösemittel in Gegenwart von Emulgatoren ist an sich bekannt.

Ebenso bekannt ist die direkte Herstellung pulverförmiger, vollständig blockierter Isocyanate durch Reaktion von Polyisocyanaten mit NCO-reaktiven Verbindungen (DE-A 25 36 976) oder die Herstellung zweiteiliger wärmeaktivierbarer Pulver (Pulvermischung aus zwei Pulvern unterschiedlicher chemischer Zusammensetzung), wobei eine Teilchenart mit NCO-reaktiven Verbindungen blockierte Isocyanatgruppen aufweist (DE-A25 56 945). Die vollständige Blockierung der NCO-Gruppen im Pulver führt zu einem zu schnellen Viskositätsaufbau bei der Vernetzung. Die Herstellung zweiteiliger Pulver über einen Mischvorgang führt zu Inhomogenitäten, die das Reaktionsprodukt negativ beeinflussen.

Aufgabe der vorliegenden Erfindung ist es, ein für die Verwendung im "slush-moulding"-Prozeß geeignetes, also freifließendes, zunächst wie ein Thermoplast aufschmelzendes, dabei aber vorteilhaft zunehmend vernetzendes PU-Pulver zu entwickeln, welches nicht die Gefahr der Vorvernetzung unter Herstellbedingungen aufweist und ferner Feststoff-Mischvorgänge vermeidet.

Die Aufgabe der vorliegenden Erfindung bestand ferner darin, für Anwendungszwecke, bei denen die Herstellung zelliger PU-Formkörper mit relativ geringer Schichtdicke oder die Hinterschäumung kompakter Folien direkt im Formteil vorteilhaft ist, geeignete, pulverförmige, aufschmelzbare, gegebenenfalls aber nachvernetzbare Polyurethansysteme zur Verfügung zu stellen, ohne daß ein aufwendiges Mahlen oder Nachvermischen mit Treibmitteln notwendig ist.

Es wurde nun gefunden, daß freifließende, zunächst wie ein Thermoplast aufschmelzende, dabei aber vorteilhaft zunehmend vernetzende Polyurethan-Pulver erhalten werden durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
   sowie
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen (jeweils pro Molekül) aufweist,
   in Gegenwart einer separat hergestellten Komponente III, die (gegebenenfalls nur anteilig) blockierte NCO-Gruppen aufweist,
   in einer inerten organischen, flüssigen Trägerphase, in der die Komponenten IA bzw. IB und das jeweilige Umsetzungsprodukt unlöslich sind, sowie
c) Abtrennung des Umsetzungsproduktes von der genannten inerten organischen Trägerphase.

Vorzugsweise stellt die kontinuierliche Phase der Emulsion von IA oder IB zugleich die inerte organische flüssige Trägerphase dar.

"Unlöslich" im Sinne der erfindungsgemäßen Lehre schließt den Begriff "nicht mischbar" ein soweit sich dies auf flüssige Tröpfchen bezieht.

Das Umsetzungsprodukt fällt in Form kugelförmiger Partikel an, deren Größe der der feinen Tröpfchen der Komponente IA bzw. IB entspricht und die durch die oberflächenaktive Verbindung vor Agglomeration geschützt sind, so daß auch nach Abtrennung von der organischen Trägerphase die freie Fließfähigkeit gewährleistet ist.

Erfindungsgemäß bevorzugt ist die Verfahrensvariante a), bei der die die disperse Phase der Emulsion bildenden Komponente I freie NCO-Gruppen aufweist (IA) und die Umsetzung mit einer Komponente II erfolgt, die im Mittel zwei gegenüber NCO-Gruppen reaktive Wasserstoffatome aufweist (IIA).

Als erfindungsgemäß eingesetzte Komponente IA wird bevorzugt ein NCO-Prepolymer verwendet, welches entweder separat oder in der erfindungsgemäß verwendeten organischen Trägerphase durch Reaktion einer gegenüber NCO-Gruppen reaktiven Verbindung mit einem Polyisocyanat hergestellt wird.

Als Polyisocyanate können dabei aromatische, aliphatische oder cycloaliphatische Diisocyanate oder Gemische derselben verwendet werden. Dabei ist zu beachten, daß diese Diisocyanate entweder flüssig oder bei den Reaktionstemperaturen in der Trägerphase flüssig emulgierbar sind oder zumindest das entstehende NCO-Prepolymer flüssig emulgierbar ist. Beispielhaft seien als aromatische Diisocyanate das Toluylendiisocyanat (2,4- und 2,6-Isomere oder Gemische derselben), das Diphenylmethandiisocyanat (4,4'- und 2,4'-Isomere oder Gemische derselben), das 1,4-Phenylendiisocyanat, das 1,5-Naphthylendiisocyanat (wegen des hohen Schmelzpunktes weniger bevorzugt), als aliphatische Diisocyanate das Hexamethylen-1,6-diisocyanat, das Xylylendiisocyanat, das 1,12-Dodecandiisocyanat, als cycloaliphatische Diisocyanate das 4,4'Methylen-bis-(cyclohexyldiisocyanat), das 1,4-Cyclohexylendiisocyanat und das Isophorondiisocyanat genannt.

Aliphatische oder cycloaliphatische Diisocyanate wie das 1,6-Hexamethylendiisocyanat oder das 4,4'-Methylen-bis-(cyclohexylisocyanat) sind bevorzugt, wenn unter Licht nicht verfärbende Produkte erforderlich sind.

Als erfindungsgemäße Komponente IIB mit zwei NCO-Gruppen werden bevorzugt eines oder ein Gemisch mehrerer der genannten Polyisocyanate eingesetzt.

Als Komponente IB oder als gegenüber Isocyanat reaktive Verbindungen bei der Herstellung des NCO-Prepolymers, welches bevorzugt als Komponente IA verwendet wird, werden bevorzugt hochmolekulare Glykole mit im Mittel zwei Hydroxygruppen und mittleren Molmassen von etwa 400 bis 6000 eingesetzt. Dabei kann es sich beispielsweise um hydroxyfunktionelle Polyester, Polycarbonate, Polyestercarbonate, Polyether, Polyethercarbonate, Polyacetale, Polyacrylate, Polybutadiene, Polyesteramide oder Polythioether handeln. Auch aminofunktionelle Polyether (vgl. US-A 4 724 252, DE-A 37 13 858) können eingesetzt werden. Dabei sind solche Verbindungen bevorzugt, welche pro Molekül im Mittel zwei gegenüber NCO-Gruppen reaktive Gruppen aufweisen. Höherfunktionelle Verbindungen können eingesetzt werden, doch muß dann gegebenenfalls durch Beimischung monofunktioneller Reaktanden die anfängliche Thermoplastizität des PU-Pulvers gewährleistet sein.

Geeignete Polyether sind z.B. solche, welche durch Ringöffnungspolymerisation von Propylenoxid oder Ethylenoxid in Gegenwart von einer oder mehrerer Verbindungen mit aktivem Wasserstoff oder durch Ringöffnungspolymerisation von Tetrahydrofuran erhalten werden.

Wenn gegenüber Licht beständige Produkte erforderlich sind, werden bevorzugt Polyester, Polycarbonate oder Polyestercarbonate eingesetzt. Geeignete Polyesterpolyole können z.B. durch Kondensation einer oder mehrerer Dicarbonsäuren, ihrer Anhydride oder Diester durch Umsetzung mit einem oder mehreren niedermolekularen Glykolen erhalten werden. Geeignete Dicarbonsäuren sind z.B. Bernsteinsäure, Adipinsäure, Korksäure, aromatische Dicarbonsäuren wie z.B. Phthalsäure, Isophthalsäure oder Terephthalsäure oder die entsprechenden teil- oder perhydrierten Typen. Geeignete niedermolekulare Glykole sind z.B. Ethylenglykol, 1,2- oder 1,3-Propylenglykol, 1,4- oder 2,3-Butandiol, Neopentylglykol, 1,6-Hexandiol, 1,8-Octandiol, Cyclohexandimethanol, Diethylenglykol oder Dipropylenglykol. Polyester, die durch Polymerisation von Lactonen wie z.B. ε-Caprolacton erhalten werden, sind ebenfalls geeignet. Geeignete aliphatische hydroxyfunktionelle Polycarbonate können z.B. durch Reaktion der obengenannten niedermolekularen Glykole mit Diarylcarbonaten oder cyclischen Carbonaten wie Propylencarbonat erhalten werden.

Die obengenannten hochmolekularen Glykole oder Aminopolyether sind geeignet als erfindungsgemäße Komponente IB und IIA. Vorteilhaft werden aber als Komponente IIA gegenüber NCO-Gruppen reaktive Verbindungen eingesetzt, welche Molmassen von weniger als 400 aufweisen. Geeignet sind z.B. die im Zusammenhang mit den aliphatischen Polyestern genannten niedermolekularen Glykole. Weiterhin geeignet sind Aminoalkohole wie z.B. N-Methyl-diethanolamin oder Aminoethanol und Diamine wie z.B. Ethylendiamin, 1,6-Diaminohexan oder Piperazine. Hydrazine, Hydrazide und Semicarbazide sind ebenfalls geeignet. Geeignet als Komponenten IB oder IIA sind auch Gemische der genannten hoch- und niedermolekularen Diole. Bevorzugt bei der Herstellung der erfindungsgemäßen PU-Pulver sind als Komponente IIA die niedermolekularen Glykole.

Die erfindungsgemäß verwendete Komponente III stellt ein Umsetzungsprodukt dar, welches separat hergestellt und mit einer der erfindungsgemäßen Komponenten IA oder IIB, oder, falls es keine freien NCO-Gruppen mehr aufweist, auch mit IB oder IIA, bevorzugt aber IA, vermischt oder coemulgiert wird.

Bei der erfindungsgemäß verwendeten Komponente III, die anteilig blockierte NCO-Gruppen aufweist, kann es sich um ein unter den Herstellbedingungen des erfindungsgemäßen PU-Pulvers gegenüber mit NCO-Gruppen reagierenden Gruppen inertes, also nach außen NCO-freies Umsetzungsprodukt mit anteilig blockierten NCO-Gruppen handeln, oder es kann sich um ein gegenüber NCO-reaktiven Gruppen reaktives, also freie NCO-Gruppen enthaltendes Umsetzungsprodukt mit anteilig blockierten NCO-Gruppen handeln, welches im Mittel höchstens zwei reaktive NCO-Gruppen aufweist, so daß es ohne Vorvernetzung in das Pulver eingebaut werden kann. Schließlich kann die erfindungsgemäß verwendete Komponente III auch ein Gemisch zweier solcher Umsetzungsprodukte darstellen.

Die erfindungsgemäß verwendete Komponente III kann z.B. erhalten werden, indem man ein Polyisocyanat anteilig oder vollständig mit einem Blockierungsmittel oder mit einem Blockierungsmittel und einer weiteren NCO-reaktiven Verbindung, z.B. einem Polyol, umsetzt. Dabei ist zu beachten, daß das erhaltene Umsetzungsprodukt mit der erfindungsgemäß verwendeten Komponente IA oder IB entweder homogen mischbar oder coemulgierbar sein muß. Vorteilhaft sollte es flüssig oder bei den erfindungsgemäß angewendeten Temperaturen schmelzbar sein.

Geeignete Polyisocyanate zur Umsetzung mit einem Blockierungsmittel und gegebenenfalls einer weiteren gegenüber NCO-Gruppen reaktiven Verbindung sind z.B. die weiter oben aufgeführten Diisocyanate. Vorteilhaft werden aber Polyisocyanate mit höherer Funktionalität verwendet, so z.B. die in der Lack- und Coatingsindustrie bekannten vernetzenden Isocyanate wie Polymere des Diphenylmethan-diisocyanats, Biurete, Trimethylolpropanaddukte oder Trimere (Isocyanurate) der obengenannten Diisocyanate.

Zur Einstellung eines bestimmten Schmelzverhaltens und zur Erhöhung der Verträglichkeit mit den Komponenten IA oder IB kann zur Herstellung der erfindungsgemäß verwendeten Komponente III eine weitere gegenüber NCO-Gruppen reaktive Verbindung mit dem blockierten Polyisocyanat zur Reaktion gebracht werden. Dabei werden bevorzugt die weiter obengenannten hochmolekularen Glykole verwendet. Das Verhältnis von Glykol zu Blockierungsmittel ist, wenn ein höherfunktionelles Isocyanat verwendet wird, so zu wählen, daß keine vorzeitige Vemetzung ("Verquallung") der erfindungsgemäßen Komponente III erfolgt.

Bei den verwendeten Blockierungsmitteln kann es sich z.B. um ein Oxim (bevorzugt Butanonoxim), ein Lactam (bevorzugt ε-Caprolactam), einen Acetessigester (bevorzugt Ethyl-acetylacetat), einen Malonester (bevorzugt Diethylmalonat) oder um ein substituiertes Phenol handeln. Aus der letzteren Gruppe sind p-Hydroxybenzoesäureester (z.B. p-Hydroxybenzoesäureethylester) besonders bevorzugt. Sie weisen niedrige Abspalttemperaturen (noch unterhalb 150°C) auf, der abgespaltene Ester besitzt eine geringe Flüchtigkeit und ist nicht geruchsbelästigend.

So kann die erfindungsgemäß verwendete Komponente III in einer bevorzugten Ausführungsform der vorliegenden Erfindung erhalten werden, indem das Trimer (Isocyanurat) des 1,6-Hexamethylendiisocyanats mit einem p-Hydroxybenzoesäureester teilweise blockiert und der Rest der NCO-Gruppen mit einem hydroxyfunktionellen Polyester, besonders bevorzugt ein Polyadipat mit einem Schmelzbereich nicht höher als 100°C, umgesetzt wird.

In einer weiteren Ausführungsform der vorliegenden Erfindung können als blockierte Polyisocyanate auch 1,3-Bis-[isocyanat-organo]-2,4-dioxo-1,3-diazetidine oder 3,5-Bis-[isocyanat-organo]-2,4,6-trioxo-tetrahydro-1,3,5-oxadiazine, wie z.B. das Addukt von 2 Mol 1,6-Hexamethylendiisocyanat und 1 Mol Kohlendioxid, eingesetzt werden.

In einer weiteren bevorzugten Ausführungsform der vorliegenden Erfindung können als Bestandteil der erfindungsgemäß verwendeten Komponente III Polyisocyanataddukte verwendet werden, die bei Erhitzen wieder NCO-Funktionalität generieren, ohne daß ein "Abspalter" frei wird. Hier seien bevorzugt die weiter oben erwähnten sogenannten Isocyanatdimeren oder Uretdione genannt. Als Beispiele seien hier aufgeführt die Dimeren des Toluylendiisocyanates, des Diphenylmethan-diisocyanates, des Isophorondiisocyanates sowie des 1,6-Hexamethylendiisocyanates sowie gemischte Dimere der genannten Isocyanate.

Diese Uretdion-Gruppen enthaltenden Isocyanate können als solche oder im Gemisch mit anderen Polyisocyanaten als erfindungsgemäß verwendete Komponente III eingesetzt werden. Sie können, z.B. zur Verringerung der Funktionalität bei im Mittel mehr als zwei freien NCO-Gruppen im Molekül, als solche oder im Gemisch mit anderen Polyisocyanaten mit gegenüber NCO-Gruppen reaktiven monofunktionellen Verbindungen, wie z.B. Alkoholen, umgesetzt und dann als erfindungsgemäße Komponente III mit noch freien NCO-Gruppen eingesetzt werden. Sie können als solche oder im Gemisch mit anderen Polyisocyanaten mit einem Gemisch aus einem hochmolekularen Glykol und, zur Einstellung der Funktionalität, einer monofunktionellen, gegenüber NCO-Gruppen reaktiven Verbindung umgesetzt werden. Sie können auch allein oder im Gemisch mit anderen Polyisocyanaten zur Herstellung der erfindungsgemäßen Komponente III unter Verwendung von Blockierungsmitteln, wie weiter oben beschrieben, verwendet werden.

Wenn unter Lichteinfluß nicht verfärbende Produkte erwünscht sind, sind die Uretdione der aliphatischen und cycloaliphatischen Diisocyanate bevorzugt. So wird in einer bevorzugten Ausführungsform der vorliegenden Erfindung das Dimere des 1,6-Hexamethylendiisocyanates, welches noch geringe Mengen an Trimerem (Isocyanurat) enthält, zur Einstellung der Funktionalität mit einem monofunktionellen Alkohol, bevorzugt n-Butanol oder n-Octanol umgesetzt, so daß im Mittel ungefähr zwei NCO-Gruppen im Molekül übrig bleiben. Das Produkt ist bei Raumtemperatur vorteilhaft flüssig und kann als erfindungsgemäß einzusetzende Komponente III verwendet werden.

Die unter Verwendung eines externen Blockierungsmittels wie z.B. p-Hydroxybenzoesäureester erhaltenen erfindungsgemäßen Komponenten III ermöglichen die Herstellung freifließender, thermoplastisch verarbeitbarer und dabei schnell nachvernetzender Pulver.

Die Verwendung der Uretdiongruppen enthaltenen Polyisocyanate ohne weitere Verwendung eines Blockierungsmittels erlaubt die Herstellung abspalterfreier, thermoplastisch verarbeitbarer und dabei nachvernetzender Polyurethan-Pulver.

Der Anteil der erfindungsgemäßen Komponente III in der Pulvermischung wird limitiert einerseits durch die Forderung einer hinreichend effektiven Vernetzung, die für einen Viskositätsanstieg während der Verarbeitung sorgt, andererseits durch die Gefahr einer Übervernetzung, die sich dadurch äußert, daß das Pulver nicht mehr gut aufschmilzt und verläuft. Bevorzugt wird die Komponente III in einer solchen Menge eingesetzt, daß der Anteil der durch Deblockierung oder Spaltung rechnerisch maximal entstehenden NCO-Gruppen, bezogen auf die Gesamtzahl der freien und blockierten NCO-Gruppen, bei etwa 1 bis 20 % liegt, vorzugsweise mindestens 3 %, besonders bevorzugt zwischen 3,5 und 12 %.

Die Gesamtzahl der NCO-Gruppen (blockiert und unblockiert) sollte im erfindungsgemäßen PU-Pulver etwa gleich der Gesamtzahl der gegenüber NCO-Gruppen reaktiven Gruppen unter Ausschluß der gegebenenfalls durch den Abspalter gestellten, gegenüber NCO-Gruppen reaktiven Gruppen sein. Die bei der Verarbeitung des Pulvers freiwerdenden NCO-Gruppen reagieren idealerweise mit dem Teil der gegenüber NCO-Gruppen reaktiven Gruppen ab, der durch Zugabe der erfindungsgemäßen Komponenten IB oder IIA nach Reaktion mit der Komponente IA oder IIB übrig bleibt. Dementsprechend ist der Anteil an den Komponenten IB oder IIA in etwa so zu wählen, daß nach Reaktion mit den freien NCO-Gruppen der Komponenten III und IA oder IIB ein Überschuß an gegenüber NCO-Gruppen reaktiven Gruppen verbleibt, der der Zahl an blockierten NCO-Gruppen der Komponenten III in etwa entspricht. Durch geringen Über- oder Unterschuß an blockierten NCO-Gruppen läßt sich das Schmelzverhalten der erfindungsgemäßen Pulver und auch die Nachvernetzung beeinflussen, so daß es von Vorteil sein kann, einen solchen Über- oder Unterschuß gezielt anzusteuern. Bevorzugt werden die einzelnen Komponenten bei der Herstellung der erfindungsgemäßen Pulver so abgestimmt, daß das Pulver thermoplastisch verarbeitbar bleibt und vorzugsweise in einem Bereich von 150 bis 200°C schmilzt.

Als flüssige, organische Trägerphase des erfindungsgemäßen Verfahrens eignen sich alle Flüssigkeiten, die mit den Reaktionsteilnehmern, z.B. mit NCO- oder aktiven Wasserstoff enthaltenden Gruppen, nicht reaktiv sind und in denen wenigstens das Gemisch der ersten und der zweiten erfindungsgemäßen Komponente und das erfindungsgemäße PU-Pulver nicht mischbar und unlöslich sind. Bevorzugt sind solche Flüssigkeiten, die nicht zum Quellen des erfindungsgemäßen PU-Pulvers führen. Wünschenswert ist auch, daß die Flüssigkeit hinreichend flüchtig ist, so daß Reste leicht vom Pulver abgetrennt werden können, daß andererseits aber der Siedepunkt oberhalb der Reaktionstemperatur liegt. Flüssigkeiten mit niedrigerem Siedepunkt können ebenfalls verwendet werden. Dies kann aber die Verwendung von Druckbehältern zur Erreichung der gewünschten Reaktionstemperatur erforderlich machen. Flüssigkeiten, die aufgrund des Siedepunktes oder aus anderen Gründen schwierig vom Produkt zu entfernen sind, können durch Waschen oder Extraktion mit anderen, leichter flüchtigen und das Produkt nicht schädigenden Flüssigkeiten entfernt werden. Der geeignete Siedebereich der Flüssigkeiten wird nach oben limitiert durch die Rückspaltungstendenz der blockierten Isocyanatgruppen im erfindungsgemäßen PU-Pulver. Somit sind für die Herstellung der erfindungsgemäßen PU-Pulver solche organischen Flüssigkeiten geeignet, welche Siedepunkte oder Siedebereiche zwischen etwa 40 und 200°C aufweisen wie z.B. Kohlenwasserstoffe, halogenierte Kohlenwasserstoffe und Ether. Flüssige Kohlenwasserstoffe, bevorzugt aliphatische Kohlenwasserstoffe, z.B. Erdölfraktionen, sind aufgrund ihrer niedrigen Kosten, ihrer Indifferenz gegenüber den Reaktionsteilnehmern und der Leichtigkeit und Vollständigkeit der Entfernung vom Reaktionsprodukt besonders zweckmäßig.

Die inerte organische Trägerphase wird, bezogen auf die Gesamtmasse des Ansatzes, in einem Anteil von etwa 20 bis 99 %, vorzugsweise 40 bis 90 %, besonders bevorzugt 50 bis 80 %, eingesetzt.

Als oberflächenaktive Verbindungen für das erfindungsgemäße Verfahren werden vorzugsweise nichtionogene polymere Materialien mit einem Molekulargewicht über 1000 verwendet, die nichtpolare (z.B. Kohlenwasserstoffreste) und hochpolare Gruppen (z.B. Amid-, Ester- oder Carbonylgruppen) enthalten. Geeignet sind z.B. die in der DE-A-39 28 150 beschriebenen Urethan-Acrylat-Copolymere. Bevorzugt werden die Copolymerisate von N-Vinyl-2-pyrrolidon (NVP) mit einem α-Olefin mit 4 bis 20 C-Atomen, die Alkylseitenketten von 2 bis 18 C-Atomen enthalten und in denen der Anteil des alkylierten Olefins im Bereich von etwa 10 bis 80 % bei einem Molekulargewicht von mehr als 1000, vorzugsweise über 4000 liegt. Im allgemeinen werden etwa 0,5 bis 10 % der oberflächenaktiven Verbindung, bezogen auf das Gesamtgewicht der Reaktionsteilnehmer, verwendet.

Zur Herstellung der erfindungsgemäßen Pulver können Katalysatoren, z.B. die in der PU-Chemie allgemein bekannten Katalysatoren, die die Reaktion von Isocyanatgruppen mit aktiven Wasserstoff enthaltenden Verbindungen beschleunigen, eingesetzt werden. Die Katalysatoren können, wenn zur Herstellung der erfindungsgemäßen Komponente III eine Umsetzung mit dem verwendeten Isocyanat notwendig ist, bei dieser Umsetzung eingesetzt werden. Falls die separate Herstellung der erfindungsgemäßen Komponente IA notwendig ist, können sie auch bei dieser Herstellung eingesetzt werden. Sie können ebenfalls bei der Umsetzung der Emulsion des Gemisches aus den Komponenten IA oder IB mit der Komponente III eingesetzt werden, wobei solche Katalysatoren bevorzugt sind, die sich in der organischen Trägerphase gut lösen.

Geeignete Katalysatoren sind z.B. tertiäre Amine wie z.B. Triethylendiamin, Quecksilber-, Blei- und Wismutkatalysatoren. Bevorzugt sind Zinnkatalysatoren wie Zinnoctoat und Dibutylzinnlaurat oder Alkylester von Diorganozinndimercaptocarbonsäuren. Sie werden in Mengen bis zu 10 %, bezogen auf die Gesamtmasse der Reaktionsteilnehmer, eingesetzt.

Zur Herstellung der erfindungsgemäßen Pulver kann beispielsweise eine erfindungsgemäße Komponente IB in Form eines Gemisches aus hoch- und niedermolekularem Glykol (OH-Komponente) unter Zusatz der Komponente III (in einer Ausführungsform ohne freie NCO-Gruppen) in der erfindungsgemäßen flüssigen Trägerphase mittels der oberflächenaktiven Verbindung emulgiert werden. Dabei ist durch die Reaktionsführung (Temperatur, Katalysatorzugabe) zu gewährleisten, daß keine vorzeitige Reaktion der verkappten bzw. blockierten NCO-Gruppen der Komponente III mit der Komponente IB erfolgt. Anschließend erfolgt unter Zusatz der Komponente IIB, beispielsweise ein aliphatisches Diisocyanat, die Umsetzung zum erfindungsgemäßen PU-Pulver. Alternativ können die Komponenten IIB und III (letztere mit oder ohne freie NCO-Gruppen) nacheinander oder im Gemisch der emulgierten Komponente IB zugesetzt werden.

In einer bevorzugten Ausführungsform der Erfindung wird als Komponente IA ein NCO-Prepolymer separat hergestellt und anschließend als Schmelze mit Hilfe einer oberflächenaktiven Verbindung in der inerten organischen Trägerphase emulgiert. Alternativ können die Vorstufen zur Herstellung dieses Prepolymers, also beispielsweise ein aliphatischer hydroxyfunktioneller Polyester und ein aliphatisches Isocyanat, in bereits emulgierter oder gelöster Form in der inerten organischen Trägerphase unter Bildung einer Emulsion der Komponente IA zur Reaktion gebracht werden. Die separat hergestellte Komponente III, enthaltend blockierte NCO-Gruppen, wird entweder (bevorzugt) mit der Schmelze der separat hergestellten Komponente IA vermischt oder (als Schmelze oder Flüssigkeit) mit der Komponente IA in der inerten organischen Trägerphase coemulgiert. Die erforderliche Menge der Komponente IIA wird zugesetzt, woraufhin man die Reaktion, bei der sich das erfindungsgemäße Pulver bildet, im wesentlichen bis zur Vollendung ablaufen läßt. Die Reaktionszeit kann durch Katalysatormenge und Temperatur eingestellt werden. Die Abtrennung des Pulvers von der Trägerphase kann z.B. durch Filtration mit anschließender Trocknung unterhalb der Entblockierungstemperatur der eingesetzten blockierten Isocyanate und unterhalb des Schmelzpunktes des Pulvers erfolgen.

Die Trägerphase kann nach Abtrennung vom erfindungsgemäßen Pulver vorteilhaft wiederverwendet werden, wenn die bevorzugten, in der Trägerphase gut löslichen Katalysatoren und Emulgatoren wie die obengenannten NVP-Olefin-Copolymere verwendet werden. Diese bleiben praktisch vollständig im Filtrat zurück.

Zusatzstoffe, z.B. feinteilige Feststoffe wie etwa Talke oder Dampfphasenkieselsäuren zur Verbesserung der Fließeigenschaften des Pulvers oder der Schmelze, können entweder während irgendeiner Stufe vor der Filtration zugegeben oder auch nachträglich dem erfindungsgemäßen Pulver zugemischt werden. Dies gilt auch für weitere Zusatzstoffe wie z.B. Pigmente, Antioxidantien, UV-Stabilisatoren, Fließhilfsmittel usw.. In einer bevorzugten Ausführungsform der vorliegenden Erfindung werden die Zusatzstoffe einer der flüssig oder als Schmelze vorliegenden Ausgangsstoffe, vorzugsweise den Komponenten IA oder IB oder einer ihrer Ausgangsstoffe, zugesetzt.

Das erfindungsgemäße Pulver wird in Form kugelförmiger Teilchen mit Durchmessern zwischen etwa 10 bis 500 µ erhalten. Art und Menge des oberflächenaktiven Mittels sowie die Intensität des Rührens sowie die Temperatur während der Reaktion beeinflussen die Größenverteilung. Wegen der fein zerteilten Form eignet sich das erfindungsgemäße Pulver für die verschiedensten Anstrich- oder Beschichtungsverfähren, wie z.B. das Wirbelsintern oder elektrostatische Spritzverfähren, sowie für die Anwendung als Heißschmelzkleber.

Die Möglichkeit der Verwendung blockierter Isocyanate bei der Herstellung von PU-Pulvern in einem kontinuierlichen Prozeß ist neben anderen, dem PU-Chemiker zur Verfügung stehenden Möglichkeiten, bereits in Betracht gezogen worden (EP 0 394 789). Jedoch wurden spezifische Vorteile, insbesondere die Verwendung der blockierten NCO-Gruppen, d.h. das, wie nachfolgend ausgeführt, vorteilhafte Schmelzverhalten im "powder-slush-moulding"-Prozeß, nicht erkannt.

Wie mit der vorliegenden Erfindung gezeigt wird, kann das erfindungsgemäße Pulver besonders vorteilhaft für Verfahren verwendet werden, bei denen auf vorgeheizten Formteilen durch Schmelzen des Pulvers ein homogener Überzug erhalten wird, der nach Abkühlung des Werkstückes als "Haut" wieder abgezogen wird. Ein solches Verfahren ist der weiter oben beschriebene "powder-slush-moulding"-Prozeß. Es wurde gefunden, daß die erfindungsgemäßen Pulver durch Variation von Menge und Art der eingesetzten Ausgangsstoffe bereits bei vorteilhaft niedrigen Formteiltemperaturen ab etwa 160°C verarbeitet werden können. Der Anteil an bei der Verarbeitung freiwerdenden blockierten NCO-Gruppen führt zu einem Viskositätsanstieg der Schmelze des erfindungsgemäßen Pulvers. Dies führt vorteilhaft dazu, daß die Schmelze bei Überhitzung oder an senkrechten Formteilwänden nicht, wie bei rein thermoplastischen und nicht nachvernetzenden Pulvern, abfließt und keine Tropfnasen oder Löcher gebildet werden. Durch den Anteil an blockierten NCO-Gruppen und/oder die NCO-Kennzahl des Pulvers kann dieses Schmelzverhalten eingestellt werden. Der kontrollierte Einbau der blockierten NCO-Gruppen ist mittels der vorher hergestellten, einfach zudosierbaren Komponente III vorteilhaft einfach zu bewerkstelligen.

Gegenstand der vorliegenden Erfindung sind ferner expandierbare, treibmittelhaltige Polyurethan-Pulverzubereitungen, die aus den erfindungsgemäßen Polyurethan-Pulvern und einem zumindest bei Raumtemperatur (25°C) festen, pulverförmigen Treibmittel bestehen.

Die erfindungsgemäße, treibmittelhaltige Polyurethan-Pulverzubereitung kann in vorteilhafter Weise zur Herstellung vernetzter, geschäumter Polyurethan-Formkörper durch Sintern bei erhöhter Temperatur mit Hilfe eines Formwerkzeugs unter Aufschmelzen des Pulvers und Expansion infolge thermischer Zersetzung des Treibmittels verwendet werden.

Dabei kann in einer bevorzugten Ausführungsform der erfindungsgemäßen treibmittelhaltigen Pulverzubereitung das Treibmittel bereits während der Herstellung des Pulvers, z.B. der Emulsion der erfindungsgemäßen Komponenten IA oder IB, zugesetzt werden. Ein nachträgliches Vermischen von Polyurethanpulver und Treibmittel mit den dabei auftretenden Problemen (Staubentwicklung) wird dadurch unnötig.

Zur Herstellung der erfindungsgemäßen treibmittelhaltigen Polyurethan-Pulverzubereitung werden bei Raumtemperatur (25°C) feste, pulverförmige Treibmittel mit einer mittleren Partikelgröße von 1 bis etwa 300 µm, vorzugsweise bis 30 µm, verwendet, die sich vorzugsweise homogen mit dem erfindungsgemäßen Polyurethan-Pulver vermischen lassen. Die Partikelgröße beeinflußt die Zersetzungstemperatur und -geschwindigkeit.

Zweckmäßigerweise werden chemische Verbindungen verwendet, die sich innerhalb eines bestimmten, möglichst engen Temperaturintervalls mit hoher Gasausbeute zersetzen. Die Zersetzungstemperatur muß dabei der Verarbeitungstemperatur und der thermischen Belastbarkeit der verwendeten erfindungsgemäßen Polyurethan-Systeme angepaßt sein. Falls das Treibmittel, wie weiter unten erläutert, bereits im Zuge der Herstellung der erfindungsgemäßen Polyurethan-Pulver noch vor Abtrennung von der Trägerphase zugesetzt wird, sollte es mit den eingesetzten Rohstoffen nicht einer die Pulverherstellung störenden Weise reagieren und sich nicht in der Trägerphase lösen. Ferner sollten die bei der thermischen Zersetzung entstehenden Zersetzungsprodukte gesundheitlich unbedenklich sein und die Thermostabilität und mechanischen Eigenschaften der erfindungsgemäßen geschäumten Polyurethan-Formkörper nicht negativ beeinflussen, ausblühen oder verfärbend wirken.

Feste Treibmittel, die diese Anforderungen zumindest teilweise erfüllen, sind beispielsweise Azoverbindungen wie Azoisobuttersäurenitril, Azodicarbonamid (auch Azobisformamid genannt) oder Barium-azodicarboxylat, substituierte Hydrazine wie z.B. Diphenylsulfon-3,3'-disulfohydrazid, 4,4'-Oxybis(sulfohydrazid), Trihydrazinotriazin oder Arylbis(sulfohydrazid), Semicarbazide wie z.B. p-Toluylen-sulfonylsemicarbazid oder 4,4'-Oxybis(benzolsulfohydrazid), Triazole wie z.B. 5-Morpholyl-1,2,3,4-thiatriazol und N-Nitrosoverbindungen wie z.B. N,N'-Dinitrosopentamethylentetramin oder N,N-Dimethyl-N,N'-dinitrosoterephthalamid, Benzoxacine wie z.B. Isatosäureanhydrid oder Treibmittelzusammensetzungen wie z.B. Natriumbicarbonat/Zitronensäure-Gemische. Von den genannten Verbindungen haben sich besonders die Azoverbindungen und Hydrazine bewährt. Die erfindungsgemäßen festen Treibmittel können als Einzelverbindungen oder als Mischungen eingesetzt werden. Besonders bevorzugt zur Herstellung der erfindungsgemäßen treibmittelhaltigen Polyurethan-Pulverzubereitung ist das Azodicarbonamid, welches mit verschiedenen definierten mittleren Teilchengrößen kommerziell erhältlich ist.

Zur Herstellung der treibmittelhaltigen Polyurethan-Pulverzubereitung kann das erfindungsgemäß verwendete feste, pulverförmige Treibmittel z.B. nach der Abtrennung des Pulvers von der inerten organischen Trägerphase mit dem getrockneten Pulver bei Temperaturen von üblicherweise unter 80°C homogen vermischt werden. Das Treibmittel kann aber auch vorteilhaft unter Vermeidung von Staubentwicklungen bei einem solchen Mischvorgang im Zuge der Herstellung des erfindungsgemäßen Polyurethan-Pulvers noch vor der Abtrennung der organischen Trägerphase zugesetzt werden.

Zur Herstellung der erfindungsgemäßen treibmittelhaltigen Polyurethan-Pulverzubereitung kann beispielsweise eine erfindungsgemäß verwendete Komponente IB in Form eines Gemisches aus hoch- und niedermolekularem Glykol (OH-Komponente) unter Zusatz der Komponente III (in einer Ausführungsform ohne freie NCO-Gruppen) in der erfindungsgemäßen flüssigen Trägerphase mittels der oberflächenaktiven Verbindung emulgiert werden. Dabei ist durch die Reaktionsführung (Temperatur, Katalysatorzugabe) zu gewährleisten, daß keine vorzeitige aktion der verkappten bzw. blockierten NCO-Gruppen der zugesetzten Komponente III mit der Komponente IB erfolgt. Anschließend erfolgt unter Zusatz der Komponente IIB, beispielsweise ein aliphatisches Diisocyanat, die Umsetzung zum erfindungsgemäßen PU-Pulver. Alternativ können die Komponenten IIB und gegebenenfalls III (letztere mit oder ohne freie NCO-Gruppen) nacheinander oder im Gemisch der emulgierten Komponente IB zugesetzt werden. Nach Abschluß der Reaktion kann dann vor der Abtrennung des Pulvers von der Trägerphase das feste, pulverförmige Treibmittel z.B. durch intensives Rühren mit der entstandenen Suspension vermischt und die erhaltene treibmittelhaltige Polyurethan-Pulverzubereitung von der Trägerphase abgetrennt werden.

In einer bevorzugten Ausführungsform der Erfindung wird zur Herstellung der erfindungsgemäßen treibmittelhaltigen Polyurethan-Pulverzubereitung das feste, pulverförmige Treibmittel bereits den Komponenten IA oder IB oder ihren Vorstufen zugesetzt und mit ihnen coemulgiert. Auf diese Weise wird erreicht, daß das Treibmittel in den Tröpfchen der Emulsion und später in den festen Partikeln der erfindungsgemäßen treibmittelhaltige Polyurethan-Pulverzubereitung inkorporiert wird. Dies ist von offensichtlichem Vorteil, da eine Staubentwicklung durch das zugesetzte Treibmittel bei der Aufarbeitung der erfindungsgemäßen treibmittelhaltigen Polyurethan-Pulverzubereitung auf diese Weise weitgehend vermieden wird.

So kann beispielsweise als Komponente IA ein NCO-Prepolymer als Schmelze bei einer Temperatur deutlich unterhalb der Zersetzungstemperatur des erfindungsgemäßen Treibmittels separat hergestellt und dabei das feste Treibmittel bereits zugesetzt werden. Die treibmittelhaltige Schmelze wird dann mit Hilfe einer oberflächenaktiven Verbindung in der inerten organischen Trägerphase emulgiert. Alternativ kann in die Vorstufen zur Herstellung dieses Prepolymers, also beispielsweise ein aliphatischer hydroxyfunktioneller Polyester und ein aliphatisches Isocyanat, das Treibmittel eingearbeitet und die Vorstufen in der inerten organischen Trägerphase unter Bildung einer Emulsion der Komponente IA zur Reaktion gebracht werden. Die gegebenenfalls verwendete separat hergestellte Komponente III, enthaltend blockierte NCO-Gruppen, kann entweder bevorzugt mit der Schmelze der separat hergestellten Komponente IA vermischt oder (als Schmelze oder Flüssigkeit) mit der Komponente IA in der inerten organischen Trägerphase coemulgiert werden. Die erforderliche Menge der Komponente IIA wird zugesetzt, woraufhin man die Reaktion, bei der sich eine Suspension der erfindungsgemäßen treibmittelhaltigen Polyurethan-Pulverzubereitung bildet, im wesentlichen bis zur Vollendung ablaufen läßt. Die Reaktionszeit kann durch Katalysatormenge und Temperatur eingestellt werden, wobei die Temperatur durch die Zersetzungstemperatur des Treibmittels und die Spalttemperatur der gegebenenfalls eingesetzten blockierten Isocyanate nach oben limitiert ist. Die Abtrennung der treibmittelhaltigen Polyurethan-Pulverzubereitung von der Trägerphase kann z.B. durch Filtration mit anschließender Trocknung unterhalb der Entblockierungstemperatur der gegebenenfalls eingesetzten blockierten Isocyanate, der Zersetzungstemperatur des Treibmittels und unterhalb des Schmelzpunktes des Pulvers erfolgen.

Die Trägerphase kann nach Abtrennung vom erfindungsgemäßen Pulver vorteilhaft wiederverwendet werden, wenn die bevorzugten, in der Trägerphase gut löslichen Katalysatoren und Emulgatoren wie die obengenannten NVP-Olefin-Copolymere verwendet werden. Diese bleiben nach Waschen des Pulvers mit dem in der Trägerphase verwendeten Lösemittel praktisch vollständig im Filtrat zurück.

Das erfindungsgemäße Pulver wird in Form kugelförmiger Teilchen mit Durchmessern zwischen etwa 10 bis 500 µm erhalten. Art und Menge des oberflächenaktiven Mittels sowie die Intensität des Rührens sowie die Temperatur während der Reaktion beeinflussen die Größenverteilung. Das erfindungsgemäß verwendete Treibmittel sollte, wenn es wie beschrieben in die Pulverpartikel inkorporiert werden soll, eine mittlere Teilchengröße deutlich unterhalb der des Pulvers aufweisen.

Die zur Herstellung der erfindungsgemäßen treibmittelhaltigen Polyurethan-Pulverzubereitung erforderliche Treibmittelmenge hängt u.a. ab von der herzustellenden Formkörpergeometrie, -dichte und -dicke sowie der Gasausbeute des Treibmittels. Bevorzugt werden 0,1 bis 10, besonders bevorzugt 0,5 bis 5 Gew.-Teile (bezogen auf 100 Teile Pulver) mindestens eines zumindest bei Raumtemperatur (25°C) festen, pulverförmigen Treibmittels verwendet.

Zusatzstoffe, z.B. feinteilige Feststoffe wie etwa Talke oder Dampfphasenkieselsäuren zur Verbesserung der Fließeigenschaften des Pulvers oder der Schmelze, können entweder während irgendeiner Stufe vor der Filtration zugegeben oder auch nachträglich dem erfindungsgemäßen Pulver zugemischt werden. Dies gilt auch für weitere Zusatzstoffe wie z.B. organische Farbstoffe (wie Ultramarine oder Phthalocyanine) oder anorganische Pigmente, Titandioxid oder Ruß, Antioxidantien, UV-Stabilisatoren, Fließhilfsmittel usw. In einer bevorzugten Ausführungsform der vorliegenden Erfindung werden die Zusatzstoffe einer der flüssig oder als Schmelze vorliegenden Ausgangsstoffe, vorzugsweise den Komponenten IA oder IB oder einer ihrer Ausgangsstoffe, zugesetzt.

Die erfindungsgemäße treibmittelhaltige Polyurethan-Pulverzubereitung kann verwendet werden, um geschäumte (zellhaltige) Polyurethan-Formkörper herzustellen. Dazu wird sie oberhalb der Zersetzungstemperatur des Treibmittels unter Aufschmelzen erhitzt. Dabei kann man z.B. wie in DE-A 40 06 648 beschrieben vorgehen. Man kann z.B. die erfindungsgemäße treibmittelhaltige Polyurethan-Pulverzubereitung in einer hinsichtlich der gewünschten Dicke des zellhaltigen Formkörpers ausreichenden Menge auf die Oberfläche eines auf 150 bis 280°C, vorzugsweise 150 bis 220°C temperierten Formwerkzeugs aufbringen und nach kurzem Kontakt, z.B. nach 10 bis 30 Sekunden, die überschüssige erfindungsgemäße treibmittelhaltige Polyurethanpulver-Zubereitung wieder abtrennen. Das Sintern unter Aufschäumen der an der Formwerkzeugoberfläche anhaftenden Pulver-Schicht erfolgt dann mittels der Wärmekapazität des Formwerkzeugs oder durch erneute Erwärmung. Nach 0,5 bis 10 Minuten läßt man das Formwerkzeug abkühlen (z.B. Luftstrom oder Wasserbad) und entformt den gebildeten geschäumten Polyurethan-Formkörper.

Man kann die erfindungsgemäße treibmittelhaltige Polyurethan-Pulverzubereitung auch in einem verschließbaren, temperierten Formwerkzeug mit Hohlraum zu geschäumten Polyurethan-Formkörpern verarbeiten, indem z.B. eine für das Ausschäumen des Formwerkzeugs ausreichende Menge der erfindungsgemäßen treibmittelhaltigen Polyurethan-Pulverzubereitung in den Hohlraum des offenen, auf 150 bis 280, vorzugsweise 150 bis 220°C temperierten Formwerkzeugs eingebracht, das Formwerkzeug verschlossen und unter weiterer Erwärmung für 0,5 bis 30, vorzugsweise 0,5 bis 15 Minuten unter Schmelzen und Schäumen der erfindungsgemäßen treibmittelhaltigen Polyurethan-Pulverzubereitung ausgeschäumt wird, wobei Vorsorge zu treffen ist, daß Gase und überschüssige Schaummengen entweichen können. Nach Abkühlen des Formwerkzeuges (s.o.) entformt man den gebildeten geschäumten Polyurethan-Formkörper.

Die in DE-A 40 06 648 beschriebenen Möglichkeiten zur Erzielung spezieller Effekte (Oberflächenstruktur, Beschichtungen etc.) können auf die erfindungsgemäßen treibmittelhaltigen Polyurethan-Pulverzubereitungen und die mit ihnen hergestellten Formkörper angewendet werden.

Insbesondere zur Herstellung von mit einer dichten Außenhaut versehenen Schaumkörpern können die erfindungsgemäßen PU-Pulver besonders vorteilhaft eingesetzt werden, indem zunächst aus den erfindungsgemäßen PU-Pulver im slush-moulding-Verfahren die Außenhaut erzeugt wird, die anschließend mit demselben, Treibmittel enthaltenden Pulver hinterschäumt wird. Die bei der Verarbeitung einsetzende Vernetzung der Außenhaut ist von besonderem Vorteil, da beim Hinterschäumen die vernetzte Außenhaut nicht mehr, wie bei thermischen Systemen, wegfließen kann. Der nachgeschaltete, mit weiterer Erwärmung verbundene Hinterschäumungsschritt bewirkt im Gegenteil eine verstärkte Vernetzung.

Die mit der erfindungsgemäßen treibmittelhaltigen Polyurethan-Pulverzubereitung hergestellten geschäumten Formkörper stellen vorzugsweise Flächengebilde mit Dicken bis 5 cm dar und weisen eine Gesamtdichte von etwa 0,1 bis 1 g/cm³, vorzugsweise 0,15 bis 0,5 g/cm³, auf. Durch Füllstoffe kann die Dichte noch weiter erhöht werden. Durch richtige Auswahl der verwendeten Polyurethan-Rohstoffe können sie sprödhart bis zähhart oder weich bis elastisch-weich eingestellt werden. Besonders vorteilhaft erweist sich die Möglichkeit der Verwendung der erfindungsgemäßen Komponente III zur Modifizierung der mechanischen Eigenschaften wie Reißfestigkeit, Elastizität oder Dichte. Durch Einarbeiten von verstärkend wirkenden Füllstoffen wie z.B. Glasfasern in die erfindungsgemäße treibmittelhaltige Polyurethan-Pulverzubereitung kann das Eigenschaftsbild weiter verändert werden.

Die mit der erfindungsgemäßen treibmittelhaltigen Polyurethan-Pulverzubereitung hergestellten geschäumten Formkörper können im Motor- und Innenraum von Kraftfahrzeugen, z.B. als Schallisolation im Motorraum, für Säulen- oder Türverkleidungen, Dachhimmel, Armlehnen oder Instrumententafeln verwendet werden. Ebenfalls geeignet sind sie z.B. für die Herstellung von Möbeln wie z.B. Polstermöbel, Kunstleder, Innenschuhe oder Taschen. Sie können auch bei der Herstellung von Schuhsohlen als Deck- oder Zwischenschicht oder Einlageteil verwendet werden.

"%-Werte" bzw. "Teile" im Sinne der vorliegenden Beschreibung bedeuten "Gew.-%" bzw. "Gew.-Teile", sofern nichts anderes erwähnt ist.

### Beispiele:

In den nachfolgenden Beispielen werden folgende Ausgangsstoffe eingesetzt:
- Polyester I =: Polyesterpolyol auf Basis Adipinsäure, Hexandiol mit einer OH-Zahl von 48.
- Polyester II =: Polyesterpolyol auf Basis Adipinsäure, Hexandiol, Neopentylglykol mit einer mittleren OH-Zahl von 56.
- pigmentierter Polyester II =: Polyester (s.o.), in den über eine beheizte (90°C) Mühle mit stationärer Korundscheibe und Rotor, kommerziell erhältlich bei Fryma Maschinen AG, Rheinfelden), ein Gemisch von 97 Teilen Titandioxidpulver und 3 Teilen Farbruß (25 Teile Pigment auf 100 Teile Gemisch) eingearbeitet wurde (OH-Zahl 42).
- Polyether =: Polypropylenglykol mit einer OH-Zahl 112.
- Emulgator =: Copolymer aus 20 Gew.-% N-Vinyl-Pyrrolidon und und 80 Gew.-% Eicosen-1, erhältlich als Antaron® V 220 von GAF.
- Hydrolyseschutzmittel =: Stabaxol I, ein unter der Bezeichnung Stabaxol® I kommerziell erhältliches (BAYER AG) Carbodiimid.
- BHT =: Kommerziell erhältlicher Stabilisator (butyliertes Hydroxytoluol).
- IPPD =: kommerziell erhältlicher Stabilisator (Isopropyl-phenyl-phenylendiamin).
- Treibmittel =: kommerziell erhältliches (Bayer AG) Azodicarbonamid mit einer mittleren Teilchengröße von 5 µm und einem Zersetzungspunkt von ca. 200°C.

### Beispiel 1 (Vergleichsbeispiel, nicht erfindungsgemäß)

62,9 Teile Polyester II und 8 Teile pigmentierter Polyester II werden auf 100°C erhitzt, gemischt und unter Vakuum entwässert und entgast. Es werden 0,2 Teile Hydrolyseschutzmittel und 0,5 Teile BHT zugesetzt. Das Gemisch wird bei 80°C mit 20,5 Teilen 1,6-Hexamethylendiisocyanat umgesetzt, bis der NCO-Wert konstant ist (berechnet 8 % NCO).

Eine Lösung von 5 Teilen Emulgator und 2 Teilen Dibutylzinndilaurat in 233 Teilen Isooctan wird auf 90°C erwärmt. Über eine Zeitspanne von ca. 10 Min. wird das Polyester-HDI-Prepolymer unter starkem Rühren eingetragen. Dabei wird mit einem Doppel-Propeller-Rührer (92,1 Teile) bei 1100 Upm gerührt. Nach 30 Min. werden 7,9 Teile 1,4-Butandiol (NCO/OH-Verhältnis = 1) zugesetzt. Die Dispersion wird für etwa 2 Stunden bei 90°C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Std. im Vakuum bei Raumtemperatur getrocknet. Das erhaltene freifließende, graue Pulver wird durch Siebe verschiedener Maschenweite gesiebt und hat die in Tab. 1 angegebenen Eigenschaften.

Von dem thermoplastischen Pulver wird eine 1000 µ dicke Schicht auf eine Glasplatte gerakelt. Nach 20 Minuten bei 200°C erhält man einen homogenen Film. Der erhaltene Film wird nach dem Erkalten von der Glasplatte entfernt und hat die in Tab. 2 angegebenen Eigenschaften.

Zur Prüfung des Aufschmelzverhaltens während des slush-moulding-Prozesses wird eine gußeiserne Form (Armlehne PKW) auf 200°C erhitzt. Anschließend wird das Pulver eingefüllt, in der Form ca. 1 Min. geschwenkt und die Form anschließend bis auf das anhaftende, gelierte Pulver wieder entleert Die Form wird für 10 Min. bei 200°C im Ofen nachgetempert. Anschließend wird sie mittels Wasser abgekühlt und die Haut herausgetrennt.

Bei dem Pulver des Vergleichsbeispiels ist die Haut unregelmäßig dick, weist Löcher und Tropfhasen auf. Ein erheblicher Teil der Schmelze ist zudem während des Tempervorgangs abgeflossen.

### Beispiel 2 (erfindungsgemäßes Pulver mit Abspalter)

### a) Herstellung der Abspalterkomponente (Vernetzer) = Komponente III

800 Teile eines Isocyanurats des 1,6-Hexamethylendiisocyanats (HDI-Trimerisat; % NCO = 21,5) werden bei 100°C mit 543,9 Teilen p-Hydroxybenzoesäureethylester umgesetzt. Nach ca. 1 Stunde werden 859 Teile Polyester I zugesetzt und die Mischung umgesetzt, bis kein freies Isocyanat mehr nachweisbar ist. Das erhaltene Produkt erstarrt unterhalb 50°C und kann portionsweise weiter eingesetzt werden.

### b) Herstellung des Pulvers

60,2 Teile Polyester II und 8 Teile pigmentierter Polyester II werden auf 100°C erhitzt, gemischt und unter Vakuum entwässert und entgast. Es werden 0,2 Teile Hydrolyseschutzmittel und 0,5 Teile BHT zugesetzt. Das Gemisch wird bei 80°C mit 19,7 Teilen 1,6-Hexamethylendiisocyanat umgesetzt, bis der NCO-Wert konstant ist (berechnet 8 % NCO) (Komponente IA). Dann werden 3,6 Teile der unter a) beschriebenen Vernetzerkomponente zugesetzt (7,7 % NCO, berechnet für die Mischung).

Eine Lösung von 5 Teilen Emulgator und 2 Teilen Dibutylzinndilaurat in 233 Teilen Isooctan wird auf 90°C erwärmt. Über eine Zeitspanne von ca. 10 Min. wird das Polyester-HDI-Prepolymer unter starkem Rühren eingetragen. Dabei wird mit einem Doppel-Propeller-Rührer bei 1100 Upm gerührt. Nach 30 Min. werden 7,8 Teile 1,4-Butandiol (Komponente IIA) zugesetzt. Die Dispersion wird für etwa 2 Stunden bei 90°C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Std. im Vakuum bei Raumtemperatur getrocknet. Das erhaltene freifließende, graue Pulver wird durch Siebe verschiedener Maschenweite gesiebt und hat die in Tab. 1 angegebenen Eigenschaften.

Von dem Pulver wird eine 1000 µ dicke Schicht auf eine Glasplatte gerakelt. Nach 20 Minuten bei 200°C erhält man einen homogenen Film. Der erhaltene Film wird nach dem Erkalten von der Glasplatte entfernt und hat die in Tab. 2 angegebenen Eigenschaften.

Zur Prüfung des Aufschmelzverhaltens während des slush-moulding-Prozesses wird eine gußeiserne Form (Armlehne PKW) auf 200°C erhitzt. Anschließend wird das Pulver eingefüllt, in der Form ca. 1 Min. geschwenkt und die Form anschließend bis auf das anhaftende, gelierte Pulver wieder entleert. Die Form wird für 10 Min. bei 200°C im Ofen nachgetempert. Anschließend wird sie mittels Wasser abgekühlt und die Haut herausgetrennt.

Die mit dem Pulver erhaltene Haut ist gleichmäßig dick, weist keine Fehlstellen (Löcher) oder Tropfnasen auf. Beim Tempervorgang fließt kein Material ab.

### Beispiel 3 (erfindungsgemäßes Pulver ohne Abspalter)

### a) Herstellung der Vernetzerkomponente = Komponente III

491 Teile eines durch Dimerisierung von 1,6-Hexamethylendiisocyanat erhaltenen, Uretdiongruppen enthaltenden Polyisocyanats (% NCO = 21,4) werden bei 90°C mit 81,3 Teilen n-Octanol umgesetzt, bis der % NCO-Wert konstant ist (ber.: 13,9 %). Das erhaltene Produkt ist bei Raumtemperatur flüssig und bequem portionsweise dosierbar.

### b) Herstellung des Pulvers

58,4 Teile Polyester II und 8 Teile pigmentierter Polyester II werden auf 100°C erhitzt, gemischt und unter Vakuum entwässert und entgast. Es werden 0,2 Teile Hydrolyseschutzmittel und 0,5 Teile BHT zugesetzt. Das Gemisch wird bei 80°C mit 18,4 Teilen 1,6-Hexamethylendiisocyanat umgesetzt. Dann werden 6,2 Teile der unter a) beschriebenen Vernetzerkomponente zugesetzt, bis der NCO-Wert konstant ist (berechnet 8 % NCO) (Komponente IA).

Eine Lösung von 5 Teilen Emulgator und 2 Teilen Dibutylzinndilaurat in 233 Teilen Isooctan wird auf 90°C erwärmt. Über eine Zeitspanne von ca. 10 Min. wird das Polyester-HDI-Prepolymer unter starkem Rühren eingetragen. Dabei wird mit einem Doppel-Propeller-Rührer bei 1100 Upm gerührt. Nach 30 Min. werden 8,3 Teile 1,4-Butandiol (Komponente IIA) zugesetzt (NCO/OH-Vehältnis = 0,96). Die Dispersion wird für etwa 2 Stunden bei 90°C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Std. im Vakuum bei Raumtemperatur getrocknet. Das erhaltene freifließende, graue Pulver wird durch Siebe verschiedener Maschenweite gesiebt und hat die in Tab. 1 angegebenen Eigenschaften.

Von dem Pulver wird eine 1000 µ dicke Schicht auf eine Glasplatte gerakelt. Nach 20 Minuten bei 200°C erhält man einen homogenen Film. Der erhaltene Film wird nach dem Erkalten von der Glasplatte entfernt und hat die in Tab. 2 angegebenen Eigenschaften.

Zur Prüfung des Aufschmelzverhaltens während des slush-moulding-Prozesses wird eine gußeiserne Form (Armlehne PKW) auf 200°C erhitzt. Anschließend wird das Pulver eingefüllt, in der Form ca. 1 Min. geschwenkt und die Form anschließend bis auf das anhaftende, gelierte Pulver wieder entleert. Die Form wird für 10 Min. bei 200°C im Ofen nachgetempert. Anschließend wird sie mittels Wasser abgekühlt und die Haut herausgetrennt.

Die mit dem Pulver erhaltene Haut ist gleichmäßig dick, weist keine Fehlstellen (Löcher) oder Tropfnasen auf. Beim Tempervorgang fließt kein Material ab.

### Beispiel 4 (erfindungsgemäßes Pulver ohne Abspalter)

Verwendet wird die Beispiel 3 unter a) bereits beschriebene Vernetzerkomponente.

42,9 Teile Polyester II und 8 Teile pigmentierter Polyester II werden auf 100°C erhitzt, gemischt und unter Vakuum entwässert und entgast. Es werden 0,2 Teile Hydrolyseschutzmittel und 0,5 Teile BHT zugesetzt. Das Gemisch wird bei 80°C mit 31,5 Teilen 4,4'-Methylen-bis-(cyclohexylisocyanat) umgesetzt. Dann werden 6,8 Teile der unter 3a) beschriebenen Vernetzerkomponente zugesetzt, bis der NCO-Wert konstant ist (berechnet 10% NCO).

Eine Lösung von 5 Teilen Emulgator und 2 Teilen Dibutylzinndilaurat in 233 Teilen Isooctan wird auf 90°C erwärmt. Über eine Zeitspanne von ca. 10 Min. wird das Polyester-Prepolymer unter starkem Rühren eingetragen. Dabei wird mit einem Doppel-Propeller-Rührer bei 1100 Upm gerührt. Nach 30 Min. werden 10,11 Teile 1,4-Butandiol zugesetzt (NCO/OH-Verhältnis = 0,96). Die Dispersion wird für etwa 2 Stunden bei 90°C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Std. im Vakuum bei Raumtemperatur getrocknet. Das erhaltene freifließende, graue Pulver wird durch Siebe verschiedener Maschenweite gesiebt und hat die in Tab. 1 angegebenen Eigenschaften.

Von dem Pulver wird eine 1000 µ dicke Schicht auf eine Glasplatte gerakelt. Nach 20 Minuten bei 200°C erhält man einen homogenen Film. Der erhaltene Film wird nach dem Erkalten von der Glasplatte entfernt und hat die in Tab. 2 angegebenen Eigenschaften.

Zur Prüfung des Aufschmelzverhaltens während des slush-moulding-Prozesses wird eine gußeiserne Form (Armlehne PKW) auf 200°C erhitzt. Anschließend wird das Pulver eingefüllt, in der Form ca. 1 Min. geschwenkt und die Form anschließend bis auf das anhaftende, gelierte Pulver wieder entleert. Die Form wird für 10 Min. bei 200°C im Ofen nachgetempert. Anschließend wird sie mittels Wasser abgekühlt und die Haut herausgetrennt.

Die mit dem Pulver erhaltene Haut ist gleichmäßig dick, weist keine Fehlstellen (Löcher) oder Tropfnasen auf. Beim Tempervorgang fließt kein Material ab.

**Tabelle 1**

| Physikalische Eigenschaften der Pulver | Beispiel | | | |
|---|---|---|---|---|
| Durchmesser der Pulverteilchen | 1 | 2 | 3 | 4 |
| % kleiner als 100 µ | 5.4 | 3.0 | 1.0 | 6 |
| % zwischen 100 und 200 µ | 70.2 | 22.7 | 70.0 | 92.9 |
| % zwischen 200 und 315 µ | 22.9 | 72.7 | 26.8 | 1 |
| % zwischen 315 und 800 µ | 1.0 | 1.2 | 0.6 | 0.1 |
| % größer als 800 µ | 0.6 | 0.4 | 1.7 | 0 |
| Schmelzpunkt [°C] | 160 | 170 | 164 | 120 |
| Haftpunkt [°C] | 140 | 150 | 144 | 95 |

Am Haftpunkt beginnen die Partikel zusammenzukleben

**Tabelle 2**

| Physikalische Eigenschaften der Filme | Beispiel | | | |
|---|---|---|---|---|
| | 1 | 2 | 3 | 4 |
| Reißfestigkeit [MPa] | 27 | 32 | 20 | 22 |
| Reißdehnung [%] | 751 | 634 | 565 | 380 |
| Weiterreißfestigkeit [N/cm] | 584 | 821 | 490 | 440 |
| Erweichungspunkt [°C] | 160 | 178 | 192 | 190 |

### Beispiel 5 (erfindungsgemäße treibmittelhaltige Polyurethan-Pulverzubereitung auf Basis Polyester/aliphatisches Isocyanat, nachvernetzend mit Abspalter; Einrühren des Treibmittels vor der Filtration)

a) Herstellung der Abspalterkomponente (Vernetzer) = Komponente III
   800 Teile eines Isocyanurats des 1,6-Hexamethylendiisocyanats (HDI-Trimerisat; %NCO = 21,5) werden bei 100°C mit 543,9 Teilen p-Hydroxybenzoesäureethylester umgesetzt Nach ca. 1 Stunde werden 859 Teile Polyester I (so.) zugesetzt und die Mischung umgesetzt, bis kein freies Isocyanat mehr nachweisbar ist. Das erhaltene Produkt erstarrt unterhalb 50°C und kann portionsweise weiter eingesetzt werden.
b) Herstellung des Pulvers
   68,7 Teile Polyester I werden auf 100°C erhitzt, gemischt und unter Vakuum entwässert und entgast. Es werden 0,2 Teile Hydrolyseschutzmittel und 0,5 Teile BHT zugesetzt. Das Gemisch wird bei 80°C mit 19,1 Teilen 1,6-Hexamethylendiisocyanat umgesetzt, bis der NCO-Wert konstant ist (berechnet 8 % NCO). Dann werden 3,6 Teile der unter a) beschriebenen Vernetzerkomponente zugesetzt. Der berechnete NCO-Wert beträgt 7,7 %.
   Eine Lösung von 50 Teilen Emulgator und 2 Teilen Dibutylzinndilaurat in 233 Teilen Isooctan wird auf 90°C erwärmt. Über eine Zeitspanne von ca. 10 Minuten wird das Polyester-HDI-Prepolymer unter starkem Rühren eingetragen. Dabei wird mit einem Doppel-Propeller-Rührer bei 1100 Upm gerührt. Nach 30 Minuten werden 7,7 Teile 1,4-Butandiol zugesetzt (NCO/OH-Verhältnis = 1). Die Dispersion wird für etwa 2 Stunden bei 90°C weitergerührt, bis kein freies Isocyanat mehr nachweisbar ist. Die Heizung wird entfernt und die entstandene sedimentierende Suspension nach Abkühlen auf Raumtemperatur unter Rühren mit 3 Teilen Treibmittel versetzt. Das treibmittelhaltige Gemisch wird anschließend durch einen Büchnertrichter filtriert. Der Filterrückstand wird zweimal mit 100 Teilen Isooctan gewaschen und anschließend für 48 Stunden im Vakuum bei Raumtemperatur getrocknet wobei ein freifließendes Pulver mit einem Schmelzpunkt von ca. 170°C erhalten wird. Mehr als 99 Gew.-% der Partikel weisen Teilchengrößen von <315 µm auf.
   Zur Herstellung eines geschäumten Flächengebildes wird eine ausreichende Menge der treibmittelhaltigen Polyurethan-Pulverzubereitung (Schichtdicke ca. 3,5 mm) auf eine Metallplatte aufgerakelt und diese für 15 Minuten bei 200°C im Ofen getempert. Dabei schmilzt das Pulvergemisch zunächst auf und beginnt dann unter Zersetzung des Treibmittels aufzuschäumen. Nach Abkühlen und Entformen erhält man eine mittelharte, elastische geschäumte Platte, die eine Dicke von 10 mm und eine Dichte von 0,16 g/cm³ aufweist.

### Beispiel 6 (erfindungsgemäße treibmittelhaltige Polyurethan-Pulverzubereitung, grau pigmentiert, auf Basis Polyester/aliphatisches Isocyanat; nachvernetzend ohne Abspalter; Einbau des Treibmittels in die Pulverteilchen)

a) Herstellung der Vernetzerkomponente = Komponente III
   491 Teile eines durch Dimerisierung von 1,6-Hexamethylendiisocyanat erhaltenen, Uretdiongruppen enthaltenden Polyisocyanats (%NCO = 21,4) werden bei 90°C mit 81,3 Teilen n-Octanol umgesetzt, bis der %NCO-Wert konstant ist (ber. 13,9 %). Das erhaltene Produkt ist bei Raumtemperatur flüssig und bequem portionsweise dosierbar.
b) Herstellung des Pulvers
   58,4 Teile Polyester II und 8 Teile pigmentierter Polyester II werden auf 100°C erhitzt, gemischt und unter Vakuum entwässert und entgast. Es werden 0,2 Teile Hydrolysierschutzmittel und 0,5 Teile BHT zugesetzt. Das Gemisch wird bei 80°C mit 18,4 Teilen 1,6-Hexamethylendiisocyanat umgesetzt, bis der NCO-Wert konstant ist (berechnet 8 % NCO). Dann werden 6,2 Teile der unter a) beschriebenen Vernetzerkomponente zugesetzt. Schließlich werden unter Rühren der Prepolymer-Schmelze 1,5 Teile Treibmittel zugesetzt und ca. 10 Minuten weitergerührt.

Eine Lösung von 5 Teilen Emulgator und 2 Teilen Dibutylzinndilaurat in 233 Teilen Isooctan wird auf 90°C erwärmt. Über eine Zeitspanne von ca. 10 Minuten wird die Mischung IA und III unter starkem Rühren eingetragen. Dabei wird mit einem Doppel-Propeller-Rührer bei 1 100 Upm gerührt. Nach 30 Minuten werden 8,3 Teile 1,4-Butandiol zugesetzt (NCO/OH-Verhältnis = 0,96). Die Dispersion wird für etwa 2 Stunden bei 90°C weitergerührt, bis kein freies Isocyanat mehr nachweisbar ist. Die Heizung wird entfernt und die Dispersion nach Abkühlen auf Raumtemperatur durch einen Büchnertrichter filtriert. Der Filterrückstand wird zweimal mit 100 Teilen Isooctan gewaschen und anschließend für 48 Stunden im Vakuum bei Raumtemperatur getrocknet. Das erhaltene freifließende, graue Pulver enthält das Treibmittel in den Pulverteilchen und schmilzt oberhalb von 160°C. Mehr als 99 % der Partikel weisen eine Korngröße von weniger als 315 µm auf.

Zur Herstellung eines geschäumten Flächengebildes wird eine ausreichende Menge der treibmittelhaltigen Polyurethan-Pulverzubereitung (Schichtdicke ca. 3 mm) auf eine auf ca. 180°C vorgeheizte Metallplatte aufgerakelt, der nicht angesinterte Überschuß der Mischung entfernt und diese für 10 Minuten bei 200°C im Ofen getempert. Dabei schmilzt das Pulvergemisch zunächst auf und beginnt dann unter Zersetzung des Treibmittels aufzuschäumen. Nach Abkühlen und Entformen erhält man eine weiche, elastische geschäumte Platte, die eine Dicke von 8 mm und eine Dichte von 0,2 g/cm³ aufweist.

### Beispiel 7 (Herstellung einer hinterschäumten Polyurethan-Folie)

Eine hinterschäumte Polyurethan-Folie, z.B. für Automobilinnenteile, wird erzeugt, indem zunächst für die Herstellung der kompakten Deckschicht ein Polyurethan-Pulverzubereitung verwendet wird, die wie in Beispiel 3 beschrieben, hergestellt wird. Ein metallisches Formteil wird auf ca. 200°C vorgeheizt. Das Pulver ohne Treibmittelzusatz wird durch Kontakt mit der Formteiloberfläche und nachtempern für 5 Minuten bei 200°C zu einer kompakten Schicht geliert. Auf die dem Formteil abgewandte Seite dieser noch im Formteil befindlichen Schicht wird die treibmittelhaltige Polyurethan-Pulverzubereitung gemäß Beispiel 6 aufgebracht, angeliert, der nicht geschmolzene Überschuß durch Drehen der Form abgetrennt und die Form nochmals für 10 Minuten bei 200°C nachgetempert. Nach Abkühlen der Form kann das geschäumte Formteil mit kompakter Oberfläche entformt werden.

### Beispiel 8: (Herstellung eines geschäumten Formteils mit verdichteter Oberfläche)

Ein vollständig ausgeschäumtes Formteil mit verdichteter Oberfläche, z.B. eine Schuhsohle, kann in einer entsprechenden Form, bestehend z.B. aus einem abnehmbaren Ober- und Unterteil, hergestellt werden. Ober- und Unterteil werden getrennt auf ca. 200°C temperiert. Die erfindungsgemäße treibmittelhaltige Polyurethan-Pulverzubereitung wird in das Unterteil in einer Menge eingefüllt, die sich aus der gewünschten mittleren Schaumdichte und dem auszuschäumenden Volumen ergibt, z.B. für 240 cm³ Volumen und eine gewünschte Dichte von 0,3 g/cm³ ca. 70 g Pulvermischung. Die Form wird durch Aufsetzen des Oberteils verschlossen und bei 200°C für ca. 15 Minuten nachgetempert. Nach dem Abkühlen kann die fertige, geschäumte Schuhsohle, die eine verdichtete Oberfläche aufweist, entnommen werden.

## Patentansprüche

1. Freifließende, zunächst wie ein Thermoplast aufschmelzende und dabei zunehmend vernetzende Polyurethan-Pulver, dadurch gekennzeichnet, daß sie erhältlich sind durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
sowie
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen aufweist,
in Gegenwart einer separat hergestellten Komponente III, die (gegebenenfalls nur anteilig) blockierte NCO-Gruppen aufweist,
in einer inerten organischen, flüssigen Trägerphase, in der die Komponenten IA bzw. IB und das jeweilige Umsetzungsprodukt mit Komponenten IIA bzw. IIB und III unlöslich sind, sowie
c) Abtrennung des Umsetzungsproduktes von der genannten inerten organischen Trägerphase.

2. Pulver gemäß Anspruch 1, dadurch gekennzeichnet, daß die Komponente III mit (gegebenenfalls nur anteilig) blockierten NCO-Gruppen
a) ein Umsetzungsprodukt aus dem Isocyanurat des 1,6-Hexamethylendiisocyanats, einem Hydroxybenzoesäureester sowie einem Polyol der mittleren Molmasse 400 bis 6000,
oder
b) ein Uretdiongruppen enthaltendes Polyisocyanat oder ein Umsetzungsprodukt aus einem Uretdiongruppen enthaltenden Polyisocyanat mit einer oder mehreren NCO-reaktiven Verbindungen
oder
c) ein Gemisch von a) und b)
darstellt.

3. Pulver gemäß Anspruch 2, dadurch gekennzeichnet, daß das Uretdiongruppen enthaltende Polyisocyanat durch Dimerisierung von Hexamethylendiisocyanat oder Isophorondiisocyanat erhalten wird.

4. Pulver gemäß einem der Ansprüche 1 bis 3, dadurch gekennzeichnet, daß die Komponente IA ein Urethan-NCO-Prepolymer darstellt, welches erhalten wird durch Umsetzung von 1,6-Hexamethylendiisocyanat und einem Polyesterdiol mit der mittleren Molmasse 400 bis 6000.

5. Pulver gemäß einem der Ansprüche 1 bis 3, dadurch gekennzeichnet, daß die Komponente IA ein Urethan-NCO-Prepolymer darstellt, welches erhalten wird durch Umsetzung von 4,4'-Methylen-bis-(cyclohexylisocyanat) und einem Polyesterdiol mit der mittleren Molmasse 400 bis 6000.

6. Pulver gemäß einem der Ansprüche 1 bis 5, dadurch gekennzeichnet, daß die in Anspruch 1 genannte Komponente IIA eine Mischung eines oder mehrerer Diole mit Molmassen von weniger als 400 darstellt.

7. Pulver gemäß einem der Ansprüche 1 bis 6, dadurch gekennzeichnet, daß als inerte organische Trägerphase ein aliphatischer Kohlenwasserstoff mit einem Siedebereich zwischen 65 und 200°C verwendet wird.

8. Expandierbare Polyurethan-Pulverzubereitung bestehend aus einem Pulver nach einem der Ansprüche 1 bis 7 und mindestens einem bei Umgebungstemperatur (25°C) festen, pulverförmigen Treibmittel

9. Verfahren zur Herstellung von freifließenden, zunächst wie ein Thermoplast aufschmelzenden und dabei zunehmend vernetzenden Polyurethan-Pulvern durch
a) Herstellung einer mit einer oberflächenaktiven Verbindung stabilisierten Emulsion aus feinen Tröpfchen einer Komponente IA mit freien NCO-Gruppen oder einer Komponente IB mit gegenüber NCO-Gruppen reaktiven Gruppen,
sowie
b) Umsetzung der Emulsion der Komponente IA mit einer Komponente IIA, die im Mittel zwei gegenüber NCO-Gruppen reaktive Wasserstoffatome aufweist oder der Emulsion der Komponente IB mit einer Komponente IIB, welche im Mittel zwei NCO-Gruppen aufweist,
in Gegenwart einer separat hergestellten Komponente III, die (gegebenenfalls nur anteilig) blockierte NCO-Gruppen aufweist,
in einer inerten organischen, flüssigen Trägerphase, in der die Komponenten IA bzw. IA und das jeweilige Umsetzungsprodukt unlöslich sind, sowie
c) Abtrennung des Umsetzungsproduktes von der genannten inerten organischen Trägerphase.

10. Verwendung der expandierbaren, treibmittelhaltigen Polyurethan-Pulverzubereitungen gemäß Anspruch 8, zur Herstellung geschäumter Polyurethan-Formkörper durch Erhitzen oberhalb der Zersetzungstemperatur des Treibmittels unter Aufschmelzen der Pulverzubereitung.
